# EUROPEAN PATENT SPECIFICATION

(11) **EP 4 060 871 B1**
(45) Date of publication and mention of the grant of the patent: **22.04.2026**
(21) Application number: 22151537.2
(22) Date of filing: 14.01.2022
(51) Int. Cl.: H02K 1/18, H02K 5/00, H02K 5/08

(54) **ROTARY ELECTRIC MACHINE**
ELEKTRISCHE DREHMASCHINE
MACHINE TOURNANTE ÉLECTRIQUE

(30) Priority: 19.03.2021 JP 2021046423
(43) Date of publication of application: 21.09.2022
(73) Proprietor: KABUSHIKI KAISHA TOSHIBA, Minato-ku Tokyo 105-0023 (JP)
(72) Inventor: MURAKAMI, Satoru, Kawasaki-shi, Kanagawa 212-0013 (JP); YAMAWAKI, Kazunori, Kawasaki-shi, Kanagawa 212-0013 (JP); YASUMURO, Kei, Kawasaki-shi, Kanagawa 212-0013 (JP); MIYACHI, Yuta, Kawasaki-shi, Kanagawa 212-0013 (JP)
(74) Representative: Hoffmann Eitle

(56) References cited:
- JP-A- H04 248 341
- JP-A- S 566 634
- JP-A- S52 135 004
- JP-U- S56 158 650

## Description

### FIELD

Embodiments described herein relate generally to a rotary electric machine.

### BACKGROUND

In general, a railway vehicle has a rotary electric machine loaded on a truck disposed at the lower portion of its body. The drive rotation force of the rotary electric machine is transmitted to wheels through a joint and a speed reducer and then the wheels are rotated to drive the railway vehicle. The rotary electric machine is fixed to the truck through an attaching part.

An attaching part for fixing a rotary electric machine to a truck needs to support the weight of the rotary electric machine on the truck. Thus, the attaching part needs adequate strength and has a complicated shape. Conventionally, such an attaching part includes a plurality of constituent members coupled by welding. That is, the plurality of constituent members is coupled by welding to produce an attaching part. Then, the attaching part is fixed to a stator of a rotary electric machine. Therefore, as a problem, due to an increase in the number of steps of welding for the attaching part or the number of steps of inspection of welded parts, much time is required for production of the rotary electric machine. An example of the prior art can be seen in document JP S56 6634 A.

### BRIEF DESCRIPTION OF THE DRAWINGS

FIG. 1 is an explanatory schematic view of a driving-force transmission path from a rotary electric machine according to an embodiment;
FIG. 2 is a sectional view of the upper portion of the rotary electric machine according to the present embodiment;
FIG. 3 is a perspective view of main parts of the rotary electric machine;
FIG. 4 is a schematic view of a stator for the rotary electric machine;
FIG. 5 is a perspective view of an upper attaching part for the rotary electric machine;
FIG. 6 is a perspective view of a lower attaching part for the rotary electric machine;
FIG. 7 is a perspective view of a stopper for the rotary electric machine;
FIG. 8 is a perspective view of a stator coupling part for the rotary electric machine;
FIG. 9 is a front view of the attachment state of the rotary electric machine;
FIG. 10 is a plan view of the attachment state of the rotary electric machine;
FIG. 11 is a plan view of a modification of the attachment state of the rotary electric machine; and
FIG. 12 is a sectional view of the upper portion of a rotary electric machine according to a modification.

### DETAILED DESCRIPTION

A rotary electric machine according to an embodiment includes a rotor, an annular stator, a pair of annular stator holding plates, and an interface. The stator is formed of a plurality of stacked magnetic plates outside of the rotor. The pair of stator holding plates is disposed on both sides of the stator in a stack direction. The interface is fixed to an outer circumferential surface of the stator to couple the pair of stator holding plates together, fixes the stator at a rotary-electric-machine attachment position, and has a casted structure continuous from a fixation surface on the outer circumferential surface of the stator to a fixation surface at the rotary-electric-machine attachment position.

### First Embodiment

### Configuration of Rotary Electric Machine

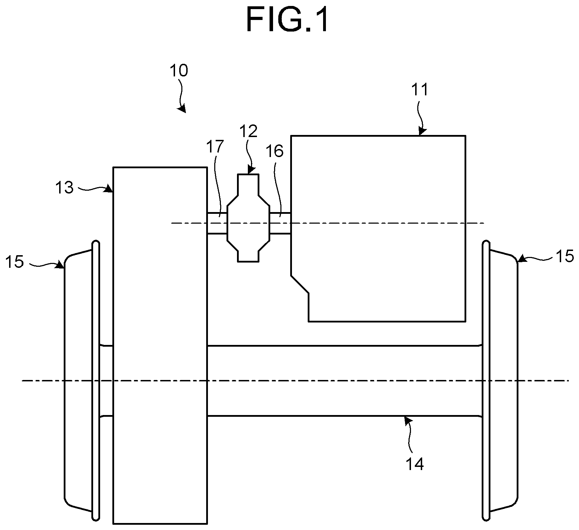

FIG. 1 is an explanatory schematic view of a driving-force transmission path for transmitting, to wheels, the driving force of a rotary electric machine according to the present embodiment. In the following embodiment, a rotary electric machine applied to a drive apparatus in a railway vehicle will be given.

A drive apparatus 10 in a railway vehicle includes a rotary electric machine 11, a coupling 12, a speed reducer 13, an axle 14, and wheels 15.

The rotary electric machine 11 serves as an electric motor. The rotary electric machine 11 is fixed to the underframe of a truck (not illustrated). The rotary electric machine 11 has a drive shaft 16 drive-rotatable. The drive shaft 16 is coupled to a coupling shaft 17 through the coupling 12. The speed reducer 13 is fixed to the underframe of the truck. The speed reducer 13 serves as a gear mechanism including a plurality of gears. The speed reducer 13 has the coupling shaft 17 coupled thereto. The speed reducer 13 reduces the input drive rotation force. The axle 14 is supported rotatably by the underframe of the truck. The axle 14 has, in its axial direction, end portions each having a wheel 15 fixed thereto. The axle 14 has, in its axial direction, an intermediate portion coupled to the speed reducer 13.

Therefore, when the rotary electric machine 11 drives, the drive shaft 16 drive-rotates, so that the drive rotation force is input to the speed reducer 13 through the drive shaft 16, the coupling 12, and the coupling shaft 17. The speed reducer 13 reduces the input number of drive-revolutions of the rotary electric machine 11 and drives the axle 14 to rotate. Then, the wheel 15 fixed to each end portion of the axle 14 rotates, so that the railway vehicle can travel.

### Configuration of Rotary Electric Machine

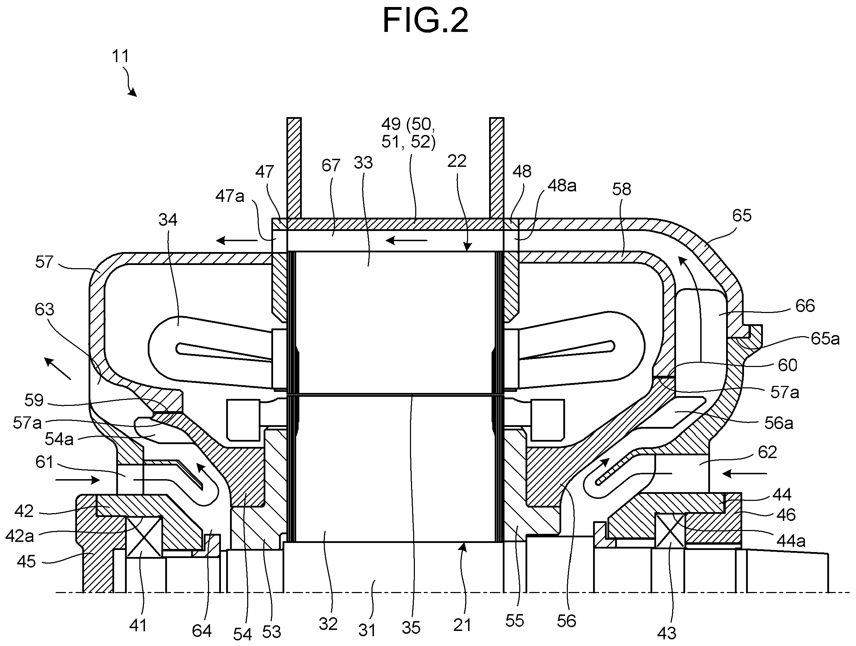

FIG. 2 is a sectional view of the internal structure cut in the rotary-shaft direction of the upper portion of the rotary electric machine in the present embodiment.

The rotary electric machine 11 according to the present embodiment has a frameless structure. The rotary electric machine 11 serves as a totally enclosed induction motor with external-air cooling and with no internal circulation of cooling air.

The rotary electric machine 11 includes a rotor 21 and a stator 22. The rotor 21 has a rotor iron core 32 that is cylindrical in shape and is fixed to the outer circumferential portion of a rotary shaft 31. The stator 22 is cylindrical in shape and is disposed outside the rotor 21. The stator 22 has a stator coil 34 housed in a plurality of grooves formed on the inner circumferential side of a stator iron core 33 cylindrical in shape. Between the outer circumferential surface of the rotor 21 and the inner circumferential surface of the stator 22, formed is an air gap 35 constant circumferentially and axially. At the time of driving of the rotary electric machine 11, the attraction and repulsion of magnetic force due to current flowing in the stator coil 34 rotates the rotor 21, so that the rotary shaft 31 outputs a rotation force.

The rotary shaft 31 has, in the axial direction, one end portion supported rotatably by a bracket 42 through a bearing 41 and has, in the axial direction, the other end portion supported rotatably by a bracket 44 through a bearing 43. The bracket 42 is discoid in shape and has a circular hole 42a axially passing through its central portion. The bracket 44 is discoid in shape and has a circular hole 44a axially passing through its central portion. The bearing 41 is disposed between the rotary shaft 31 and the circular hole 42a of the bracket 42. The bearing 43 is disposed between the rotary shaft 31 and the circular hole 44a of the bracket 44. The bearing 41 is supported by a support 45 attached to the bracket 42, resulting in being prevented from falling off. The bearing 43 is supported by a support 46 attached to the bracket 44, resulting in being prevented from falling off. The support 45 is cylindrical in shape and fits with the circular hole 42a of the bracket 42 from outside in the axial direction. The support 46 is cylindrical in shape and fits with the circular hole 44a of the bracket 44 from outside in the axial direction. The rotary shaft 31 has, in the axial direction, the one end portion covered with the bracket 42 and has, in the axial direction, the other portion protruding outward from the circular hole 44a of the bracket 44. The rotary shaft 31 has the end portion protruding outward from the circular hole 44a of the bracket 44, to which the coupling 12 is attached (refer to FIG. 1).

The stator iron core 33 is annular in shape and is formed of a plurality of stacked magnetic plates. The stator iron core 33 has, in the stack direction, both sides with which a pair of stator holding plates 47 and 48 is disposed in tight contact. The stator holding plates 47 and 48 are each shaped like a ring. The stator holding plates 47 and 48 are identical in shape and are coupled through a plurality of stator coupling parts 49 (50, 51, and 52) (four in the present embodiment). The stator coupling parts 49 (50, 51, and 52) are disposed at predetermined intervals in the circumferential direction of the stator 22 on the outer circumferential side of the stator 22. The stator coil 34 is disposed on the inner circumferential side of the stator iron core 33.

The rotor 21 has, in the axial direction, one side to which a cooling fan 54 is coupled through a rotor holding plate 53 and has, in the axial direction, the other side to which a cooling fan 56 is coupled through a rotor holding plate 55. The cooling fan 54 is discoid in shape and has a plurality of blades 54a disposed at predetermined intervals in the circumferential direction of its outer circumferential portion. The cooling fan 56 is discoid in shape and has a plurality of blades 56a disposed at predetermined intervals in the circumferential direction of its outer circumferential portion. The cooling fans 54 and 56 rotate integrally with the rotary shaft 31 and the rotor 21. The stator 22 has, in the axial direction, one side on which a bracket 57 is disposed and has, in the axial direction, the other side on which a bracket 58 is disposed. The bracket 57 has a circular hole 57a axially passing through its central portion. The bracket 58 has a circular hole 58a axially passing through its central portion. The bracket 57 has an outer circumferential portion coupled to the outer circumferential portion side of the stator holding plate 47 and the bracket 58 has an outer circumferential portion coupled to the outer circumferential portion side of the stator holding plate 48, so that the brackets 57 and 58 cover both sides in the axial direction of the stator 22. The bracket 57 has an inner circumferential portion of the circular hole 57a in contact with the outer circumferential portion of the cooling fan 54. The bracket 58 has an inner circumferential portion of the circular hole 58a in contact with the outer circumferential portion of the cooling fan 56. Between the inner circumferential portion of the circular hole 57a of the bracket 57 and the outer circumferential portion of the cooling fan 54, disposed is a labyrinth seal 59 shaped like a ring. Between the inner circumferential portion of the circular hole 58a of the bracket 58 and the outer circumferential portion of the cooling fan 56, disposed is a labyrinth seal 60 shaped like a ring.

The bracket 42 is provided with a plurality of external-air inlets 61 (four in the present embodiment) located outside the bearing 41. The bracket 44 is provided with a plurality of external-air inlets 62 (four in the present embodiment) located outside the bearing 43. The plurality of external-air inlets 61 is disposed at predetermined intervals in the circumferential direction of the bracket 42 and passes through the bracket 42 in the axial direction. The plurality of external-air inlets 62 is disposed at predetermined intervals in the circumferential direction of the bracket 44 and passes through the bracket 44 in the axial direction. The bracket 42 is provided with a plurality of external-air outlets 63 (four in the present embodiment) located outside the external-air inlets 61. The plurality of external-air outlets 63 is disposed at predetermined intervals in the circumferential direction of the bracket 42 and is provided in the axial direction of the bracket 42. The external-air inlets 61 and the external-air outlets 63 communicate through a cooling passage 64. The cooling passage 64 is segmented by the bracket 42 and the cooling fan 54, in which a blade 54a of the cooling fan 54 is located.

A cover 65 is disposed outside the bracket 58. The cover 65 is curved in shape and has a circular hole 65a axially passing through its central portion. The cover 65 has an outer circumferential portion coupled to the outer circumferential portion of the stator holding plate 48, covering the outside of the bracket 58. The external-air inlets 62 each communicate with one side of a cooling passage 66. The cooling passage 66 is segmented not only by the bracket 44 and the cooling fan 56 but also by the bracket 58 and the cover 65, in which a blade 55a of the cooling fan 56 is located. An air passage 67 is formed between the stator iron core 33 and each of the stator coupling parts 49 (50, 51, and 52). The air passage 67 is provided parallel to the axial direction of the stator 22. The stator holding plates 47 and 48 have, respectively, through holes 47a and 48a opposed to the air passage 67. The air passage 67 communicates with the other side of the cooling passage 66 through the through hole 48a and communicates with the outside through the through hole 47a.

Rotation of the rotor 21 causes the cooling fans 54 and 56 to rotate. Rotation of the cooling fan 54 causes the external air to be taken from each external-air inlet 61 to the cooling passage 64. The external air taken in the cooling passage 64 cools the rotor 21 while flowing in the cooling passage 64, and is discharged outward from the external-air outlet 63. Rotation of the cooling fan 56 causes the external air to be taken from each external-air inlet 62 to the cooling passage 66. The external air taken in the cooling passage 66 cools the rotor 21 while flowing in the cooling passage 66, and flows in the air passage 67 through the through hole 48a. The external air taken in the air passage 67 cools the stator 22 while flowing in the air passage 67, and is discharged outward from the through hole 47a.

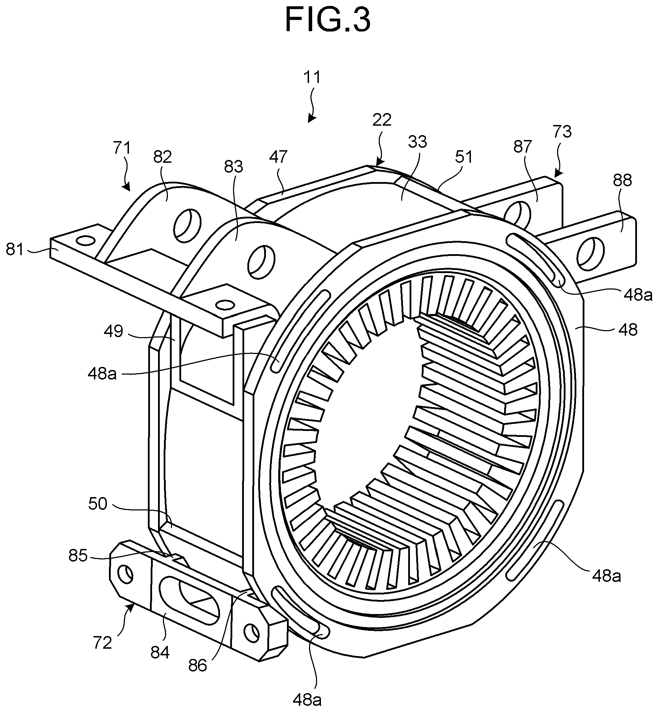

FIG. 3 is a perspective view of main parts of the rotary electric machine. FIG. 3 illustrates the rotary electric machine 11 in which interfaces are attached to the outer circumferential portion of the stator 22. Note that the rotary shaft 31 and the rotor 21 are omitted in FIG. 3.

In the present embodiment, the interfaces are an upper attaching part 71, a lower attaching part 72, a stopper 73, and the stator coupling part 52. The upper attaching part 71, the lower attaching part 72, the stopper 73, and the stator coupling part 52 are disposed at predetermined intervals in the circumferential direction of the stator 22. The upper attaching part 71, the lower attaching part 72, the stopper 73, and the stator coupling part 52 are each fixed to the stator iron core 33 and the stator holding plates 47 and 48 by welding. The upper attaching part 71 serves as a support for supporting the rotary electric machine 11 to the body and is fixed to the upper portion on one side of the stator 22. The lower attaching part 72 serves as a support for supporting the rotary electric machine 11 to the body and is fixed to the lower portion on the one side of the stator 22. The stopper 73 is used as a hook for conveying the rotary electric machine 11. In addition, even if the rotary electric machine 11 falls off, the stopper 73 abuts against the axle 14 (refer to FIG. 1) such that the rotary electric machine 11 is inhibited from being damaged due to a fall. The stator coupling part 52 couples the stator holding plates 47 and 48 together.

### Configuration of Stator

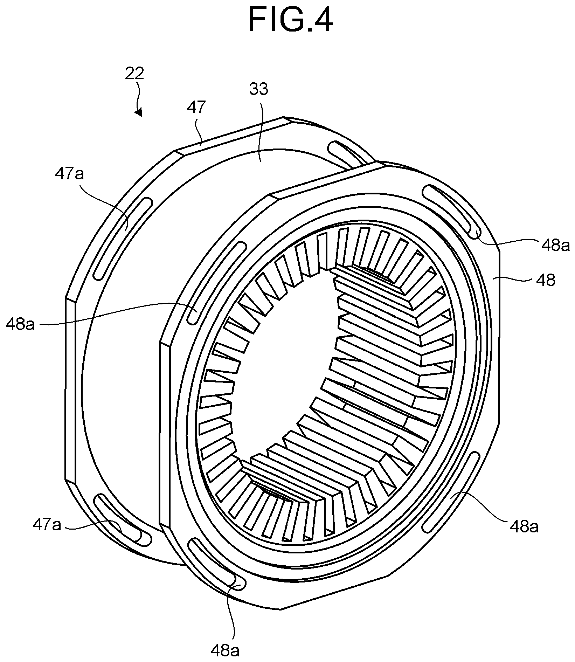

FIG. 4 is a schematic view of the stator for the rotary electric machine. FIG. 4 illustrates the stator 22 for the rotary electric machine 11 viewed obliquely from above.

The stator holding plates 47 and 48 are each shaped like a ring. The stator iron core 33 is annular in shape and is formed of a plurality of stacked magnetic plates. The stator iron core 33 has, in the stack direction, both sides with which the stator holding plates 47 and 48 are disposed in tight contact. The stator holding plate 47 shaped like a ring has through holes 47a at predetermined intervals in the circumferential direction of its outer circumferential portion. The stator holding plate 48 shaped like a ring has through holes 48a at predetermined intervals in the circumferential direction of its outer circumferential portion.

The upper attaching part 71, the lower attaching part 72, the stopper 73, and the stator coupling part 52 as the interfaces according to the present embodiment are made by casting. That is, the upper attaching part 71, the lower attaching part 72, the stopper 73, and the stator coupling part 52 are each produced by pouring molten metal into a cast and solidifying the metal by cooling.

### Configurations of Interfaces

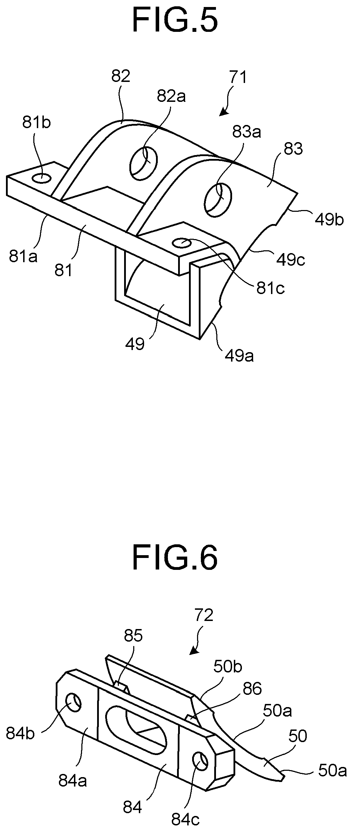

FIG. 5 is a perspective view of the upper attaching part for the rotary electric machine.

FIG. 5 illustrates the upper attaching part 71 viewed obliquely from above. As illustrated in FIGS. 3 and 5, the upper attaching part 71 includes the stator coupling part 49, a fixing part 81, and a plurality of support coupling parts 82 and 83. The stator coupling part 49 is disposed between the stator holding plates 47 and 48, on the outer circumferential side of the stator 22. The stator coupling part 49 has, in the circumferential direction of the stator 22, one end portion and the other end portion at which attachment surfaces 49a and 49b are formed, respectively, in which a cut-out portion 49c is formed between the attachment surfaces 49a and 49b. The fixing part 81 is disposed at the upper portion of the stator coupling part 49 and is disposed in the axial direction of the stator 22. The fixing part 81 fixes the stator 22 at the rotary-electric-machine attachment position. The fixing part 81 has an attachment surface 81a serving as a horizontal plane and has a plurality of attachment holes 81b and 81c (two in the present embodiment). The attachment surface 81a of the fixing part 81 is a machined face subjected to facing by machining (e.g., cutting) after casting. The support coupling parts 82 and 83 couple the stator coupling part 49 and the fixing part 81 together. The support coupling parts 82 and 83 are disposed perpendicularly to the stator coupling part 49 and the fixing part 81. The support coupling parts 82 and 83 multiple in number (two in the present embodiment) are disposed at a predetermined interval in the axial direction of the stator 22. The support coupling parts 82 and 83 have through holes 82a and 83a, respectively.

FIG. 6 is a perspective view of the lower attaching part for the rotary electric machine.

FIG. 6 illustrates the lower attaching part 72 viewed obliquely from above. As illustrated in FIGS. 3 and 6, the lower attaching part 72 includes the stator coupling part 50, a fixing part 84, and a plurality of support coupling parts 85 and 86. The stator coupling part 50 is disposed between the stator holding plates 47 and 48, on the outer circumferential side of the stator 22. The stator coupling part 50 has, in the circumferential direction of the stator 22, one end portion and the other end portion at which attachment surfaces 50a and 50b are formed, respectively, in which a cut-out portion 50c is formed between the attachment surfaces 50a and 50b. The fixing part 84 is disposed at a side portion of the stator coupling part 50 and is disposed in the axial direction of the stator 22. The fixing part 84 fixes the stator 22 at the rotary-electric-machine attachment position. The fixing part 84 has an attachment surface 84a serving as a horizontal plane and has a plurality of attachment holes 84b and 84c (two in the present embodiment) and a through hole 84d between the attachment holes 84b and 84c. The attachment surface 84a of the fixing part 84 is a machined face subjected to facing by machining (e.g., cutting) after casting. The support coupling parts 85 and 86 couple the stator coupling part 50 and the fixing part 84 together. The support coupling parts 85 and 86 are disposed perpendicularly to the stator coupling part 50 and the fixing part 84. The support coupling parts 85 and 86 multiple in number (two in the present embodiment) are disposed at a predetermined interval in the axial direction of the stator 22.

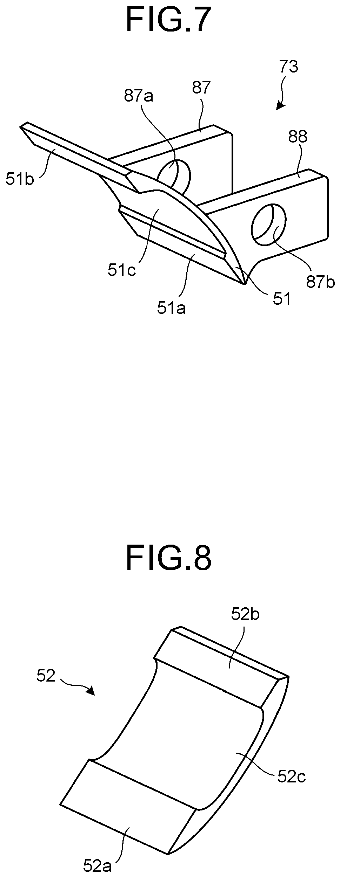

FIG. 7 is a perspective view of the stopper for the rotary electric machine.

FIG. 7 illustrates the stopper 73 viewed obliquely from above. As illustrated in FIGS. 3 and 7, the stopper 73 includes the stator coupling part 51 and a plurality of locking parts 87 and 88. The stator coupling part 51 is disposed between the stator holding plates 47 and 48, on the outer circumferential side of the stator 22. The stator coupling part 51 has, in the circumferential direction of the stator 22, one end portion and the other end portion at which attachment surfaces 51a and 51b are formed, respectively, in which a cut-out portion 51c is formed between the attachment surfaces 51a and 51b. The locking parts 87 and 88 are coupled to the outer portion of the stator coupling part 51. The locking parts 87 and 88 are disposed perpendicularly to the stator coupling part 51. The locking parts 87 and 88 multiple in number (two in the present embodiment) are disposed at a predetermined interval in the axial direction of the stator 22. The locking parts 87 and 88 have through holes 87a and 87b, respectively.

FIG. 8 is a perspective view of the stator coupling part for the rotary electric machine.

FIG. 8 illustrates the stator coupling part 52 viewed obliquely from above. As illustrated in FIGS. 3 and 8, the stator coupling part 52 is disposed between the stator holding plates 47 and 48, on the outer circumferential side of the stator 22. The stator coupling part 52 has, in the circumferential direction of the stator 22, one end portion and the other end portion at which attachment surfaces 52a and 52b are formed, respectively, in which a cut-out portion 52c is formed between the attachment surfaces 52a and 52b.

### Detailed Configuration of Stator

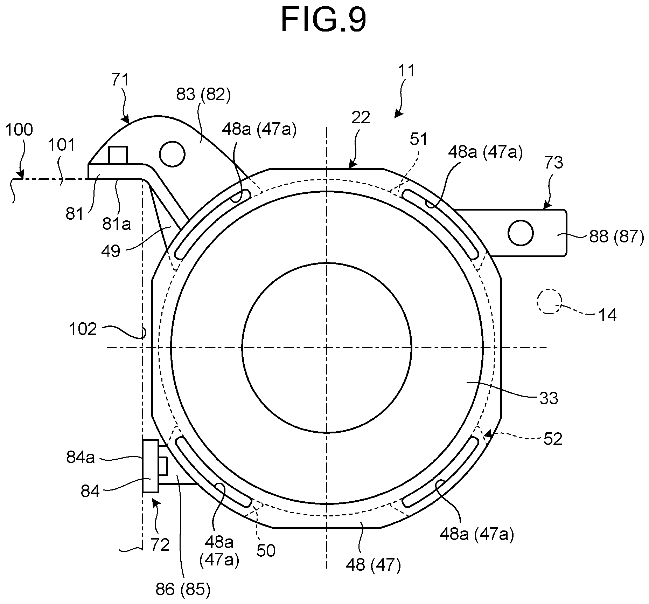

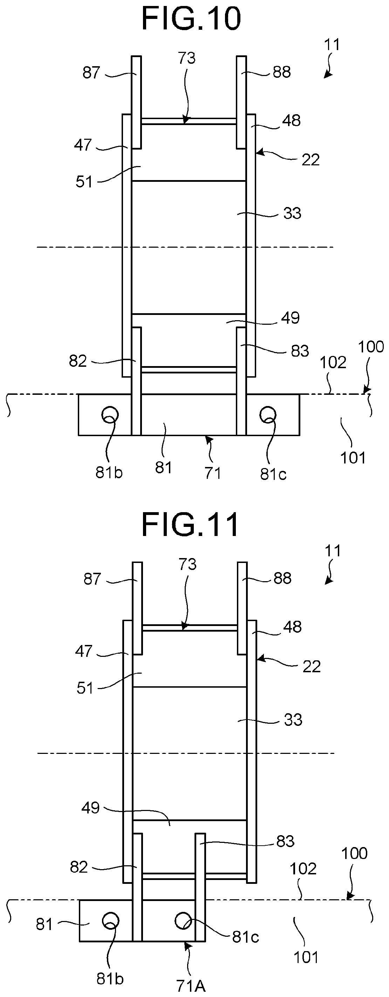

FIG. 9 is a front view of the attachment state of the rotary electric machine. FIG. 10 is a plan view of the attachment state of the rotary electric machine. Note that the rotary shaft 31 and the rotor 21 are omitted in FIGS. 9 and 10.

FIG. 9 illustrates the rotary electric machine having been attached to the underframe of the truck, in front view. FIG. 10 illustrates the rotary electric machine having been attached to the underframe of the truck, in plan view. As illustrated in FIGS. 9 and 10, the rotary electric machine 11 has the stator 22 having its outer circumferential portion to which the upper attaching part 71 and the lower attaching part 72 are fixed. An underframe 100 of the truck as the rotary-electric-machine attachment position is provided with a horizontal attachment surface 101 and a vertical attachment surface 102. The rotary electric machine 11 is fixed with the upper attaching part 71 of which the fixing part 81 has the attachment surface 81a in tight contact with the horizontal attachment surface 101 of the underframe 100 and with fastening bolts, not illustrated, screwed in the underframe 100 through the attachment holes 81b and 81c. The rotary electric machine 11 is fixed with the lower attaching part 72 of which the fixing part 84 has the attachment surface 84a in tight contact with the vertical attachment surface 102 of the underframe 100 and with fastening bolts, not illustrated, screwed in the underframe 100 through the attachment holes 84b and 84c. With the rotary electric machine 11 fixed to the underframe 100 of the truck, the stopper 73 is located above the axle 14. The stopper 73 is used as a hook. In addition, even if the rotary electric machine 11 falls off, the stopper 73 abuts against the axle 14, resulting in prevention of a fall.

Here, the upper attaching part 71 is fixed to the outer circumferential surface of the stator 22 and couples the pair of stator holding plates 47 and 48 together. In addition, the upper attaching part 71 fixes the stator 22 to the underframe 100 of the truck as the rotary-electric-machine attachment position. The upper attaching part 71 has a casted structure continuous from the fixation surface on the outer circumferential surface of the stator 22 to the fixation surface on the horizontal attachment surface 101 of the underframe 100.

The lower attaching part 72 is fixed to the outer circumferential surface of the stator 22 and couples the pair of stator holding plates 47 and 48 together. In addition, the lower attaching part 72 fixes the stator 22 to the underframe 100 of the truck as the rotary-electric-machine attachment position. The lower attaching part 72 has a casted structure continuous from the fixation surface on the outer circumferential surface of the stator 22 to the fixation surface on the vertical attachment surface 102 of the underframe 100.

### Modification of Attachment State

FIG. 11 is a plan view of a modification of the attachment state of the rotary electric machine. Note that the rotary shaft 31 and the rotor 21 are omitted in FIG. 11.

According to the above description, as illustrated in FIG. 10, the upper attaching part 71 has the fixing part 81 coupled to the stator coupling part 49 through the two support coupling parts 82 and 83, has the stator coupling part 49 and the support coupling parts 82 and 83 fixed to the outer circumferential portions of the stator holding plates 47 and 48, and has the fixing part 81 provided with the attachment holes 81b and 81c outside the support coupling parts 82 and 83. However, this configuration is not limiting.

FIG. 11 illustrates the rotary electric machine having been attached to the underframe of the truck, in plan view. As illustrated in FIG. 11, an upper attaching part 71A has a fixing part 81 coupled to a stator coupling part 49 through two support coupling parts 82 and 83. The stator coupling part 49 is fixed to the outer circumferential portions of the stator holding plates 47 and 48. The support coupling part 82 is fixed to the stator coupling part 49 and to the stator holding plate 47. The support coupling part 83 is fixed to the stator coupling part 49 but is not fixed to the outer circumferential portion of the stator holding plate 48 because of being disposed apart by a predetermined length from the stator holding plate 48. The fixing part 81 is provided with an attachment hole 81b outside the support coupling part 82 and with an attachment hole 81c between the support coupling parts 82 and 83. In the present embodiment, because the upper attaching part 71A is produced by casting, the support coupling parts 82 and 83 and the fixing part 81 can be produced desirably in position and shape with their positions to the stator coupling part 49 meeting the arrangement of the rotary electric machine 11. That is, the upper attaching part 71A can be produced in a complicated shape.

### Modification of Rotary Electric Machine

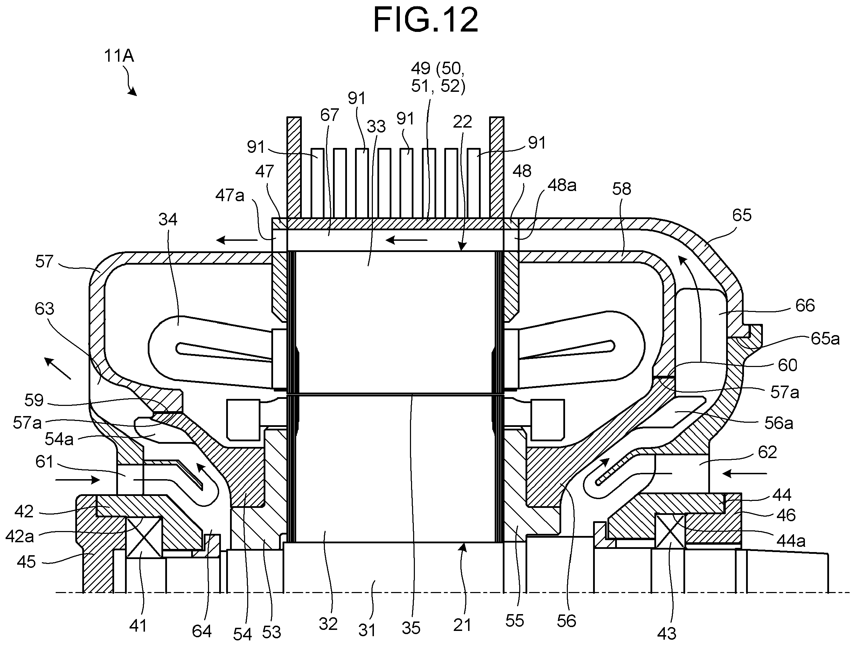

FIG. 12 is a sectional view of the upper portion of a rotary electric machine according to a modification. Note that members similar in function to those in the configuration described with FIG. 2 are denoted with the same reference signs and thus the detailed descriptions thereof will be omitted.

FIG. 12 illustrates the internal structure cut in the rotary-shaft direction of the rotary electric machine. As illustrated in FIG. 12, a rotary electric machine 11A includes a rotor 21 and a stator 22. The rotary electric machine 11A includes a cooling fin 91 disposed on the outer surface of a stator coupling part 49. An upper attaching part 71 includes a fixing part 81 coupled to the stator coupling part 49 through support coupling parts 82 and 83. The cooling fin 91 includes a plurality of plates. The cooling fin 91 has the plurality of plates disposed between the support coupling parts 82 and 83, on the outer portion of the stator coupling part 49. The cooling fin 91 has the plurality of plates that is disposed in the circumferential direction of the stator 22 and is disposed at predetermined intervals in the axial direction of the stator 22, on the outer portion of the stator coupling part 49.

When the rotor 21 rotates, a cooling fan 56 rotates, taking the external air from an external-air inlet 62 to a cooling passage 66. Then, the external air flows in an air passage 67, resulting in being discharged. The stator coupling part 49 is warmed up by the external air having risen in temperature after cooling the rotor 21 and the stator 22. Here, the stator coupling part 49 is cooled due to heat dissipation from the cooling fin 91.

Note that, the cooling fin 91 is disposed on the outer surface of the stator coupling part 49 of the rotary electric machine 11A according to the above description, and furthermore, cooling fins are disposed on the outer surfaces of the other stator coupling parts 50, 51, and 52.

### Functional Effects in Embodiment

A rotary electric machine according to the present embodiment includes: a rotor 21; an annular stator 22 formed of a plurality of stacked magnetic plates outside of the rotor 21; a pair of annular stator holding plates 47 and 48 disposed on both sides of the stator 22 in the stack direction; and an upper attaching part 71 and a lower attaching part 72 each as an interface that is fixed to the outer circumferential surface of the stator 22 to couple the pair of stator holding plates 47 and 48 together, fixes the stator 22 at the rotary-electric-machine attachment position, and has a casted structure continuous from the fixation surface on the outer circumferential surface of the stator 22 to the fixation surface at the rotary-electric-machine attachment position.

Therefore, production of the upper attaching part 71, the lower attaching part 72, a stopper 73, and a stator coupling part 52 by casting enables simplification of a process of production and enhancement in reliability. For example, production of the stator holding plates 47 and 48 by stamping requires no protrusions on their outer circumferential portion sides, resulting in an improvement in material yield, so that a reduction can be made in production cost.

In the rotary electric machine according to the present embodiment, the upper attaching part 71 and the lower attaching part 72, which are each as the interface, include stator coupling parts 49 and 50, respectively. The stator coupling parts 49 and 50 each have, in the circumferential direction of the stator 22, end portions each bent to the outer circumferential surface of the stator 22, the end portions forming the fixation surface on the outer circumferential surface of the stator 22. The stator coupling parts 49 and 50 each have, in the axial direction of the stator 22, end portions respectively fixed to the pair of stator holding plates 47 and 48. Therefore, the stator holding plates 47 and 48 and the stator 22 can be integrally coupled through the upper attaching part 71 and the lower attaching part 72.

In the rotary electric machine according to the present embodiment, an air passage 67 through which cooling air flows in the axial direction of the stator 22 is provided between the outer circumferential surface of the stator 22 and each of the stator coupling parts 49 and 50, the air passage 67 having, in the axial direction of the stator 22, one end side communicating with the inside of the rotary electric machine through the through hole 48a of the stator holding plate 48 and the cooling passage 66 and having, in the axial direction of the stator 22, the other end side communicating with the outside of the rotary electric machine through a through hole 47a of the stator holding plate 47. Therefore, the stator 22 can be effectively cooled by the cooling air flowing in the air passage 67.

In the rotary electric machine according to the present embodiment, the upper attaching part 71 and the lower attaching part 72 include, respectively, fixing parts 81 and 84 having attachment surfaces (fixation surfaces) 81a and 84a to be fixed to an underframe 100 as the rotary-electric-machine attachment position, and the attachment surfaces 81a and 84a serve, respectively, as cut faces in surface contact with attachment surfaces 101 and 102 of the underframe 100. Therefore, the rotary electric machine 11 can be fixed with high accuracy at the proper position of the underframe 100 by the respective fixing parts 81 and 84 of the upper attaching part 71 and the lower attaching part 72.

In the rotary electric machine according to the present embodiment, the upper attaching part 71 includes support coupling parts 82 and 83 coupling the stator coupling part 49 and the fixing part 81 together, and the lower attaching part 72 includes support coupling parts 85 and 86 coupling the stator coupling part 50 and the fixing part 84 together. The support coupling parts 82 and 83 are coupled perpendicularly to the stator coupling part 49 and the fixing part 81 and the support coupling parts 85 and 86 are coupled perpendicularly to the stator coupling part 50 and the fixing part 84, between the pair of stator holding plates 47 and 48. Therefore, the upper attaching part 71 and the lower attaching part 72 can be enhanced in rigidity, so that the rotary electric machine 11 can be firmly fixed to the underframe 100.

The rotary electric machine according to the present embodiment further includes a cooling fin 91 disposed on the outer surface of the stator coupling part 49. Therefore, the stator 22 can be effectively cooled due to heat dissipation through the cooling fin 91.

Note that, although the upper attaching part 71, the lower attaching part 72, the stopper 73, and the stator coupling part 52 applied as interfaces have been given in the embodiment described above, a different interface may be provided.

The rotary electric machine according to the present embodiment has been given as a totally enclosed induction motor in the embodiment described above, but this configuration is not limiting.

The present invention is not limited to the described embodiments. Alterations and/or modifications of the described embodiments are contemplated as being alternative forms of the invention as far as they do not depart from the scope of the invention, which is defined by the appended claims.

## Claims

1. A rotary electric machine (11; 11A) comprising:
a rotor (21);
an annular stator (22) formed of a plurality of stacked magnetic plates outside of the rotor;
a pair of annular stator holding plates (47, 48) disposed on both sides of the stator (22) in a stack direction; the stator holding plates (47, 48) being disposed in tight contact with both sides of the stator (22); and
an interface (52, 71, 72, 73) fixed to an outer circumferential surface of the stator to couple the pair of stator holding plates (47, 48) together, **characterized in that** the interface (52, 71, 72, 73) fixes the stator (22) to a fixation surface at a rotary-electric-machine attachment position,
wherein the interface (52, 71, 72, 73) has a casted structure continuous from a fixation surface on the outer circumferential surface of the stator (22) to the fixation surface at the rotary-electric-machine attachment position.

2. The rotary electric machine (11; 11A) according to claim 1, wherein
the interface (52, 71, 72, 73) includes a stator coupling part (52) having, in a circumferential direction of the stator (22), end portions each bent to the outer circumferential surface of the stator (22) to form the fixation surface on the outer circumferential surface of the stator (22), and
the stator coupling part (52) has, in an axial direction of the stator (22), end portions respectively fixed to the pair of stator holding plates (47, 48).

3. The rotary electric machine (11; 11A) according to claim 2, wherein
a space between the outer circumferential surface of the stator (22) and the stator coupling part (52) is an air passage (67) through which cooling air flows in the axial direction of the stator, and
the air passage (67) has: in the axial direction of the stator (22), one end side communicating with an inside of the rotary electric machine through a through hole of one of the pair of stator holding plates (47, 48) and a cooling passage; and another end side communicating with an outside of the rotary electric machine through a through hole of another of the pair of stator holding plates (47, 48).

4. The rotary electric machine (11; 11A) according to claim 2 or 3, wherein
the interface (52, 71, 72, 73) includes a fixing part (81; 84) having the fixation surface on the rotary-electric-machine attachment position, and
the fixation surface serves as a cut face in surface contact with an attachment surface at the rotary-electric-machine attachment position.

5. The rotary electric machine (11; 11A) according to claim 4, wherein
the interface (52, 71, 72, 73) includes a support coupling part (82; 83; 85; 86) coupling the stator coupling part (52) and the fixing part (81; 84) together, and
the support coupling part (82; 83; 85; 86) is coupled perpendicularly to the stator coupling part (52) and the fixing part (81; 84) between the pair of stator holding plates (47, 48).

6. The rotary electric machine (11; 11A) according to any one of claims 2 to 5, further comprising:
a cooling fin (91) disposed on an outer surface of the stator coupling part (52).

## Patentansprüche

1. Rotierende elektrische Maschine (11; 11A), die Folgendes aufweist:
einen Rotor (21);
einen ringförmigen Stator (22), der aus einer Vielzahl von gestapelten magnetischen Platten außerhalb des Rotors ausgebildet ist;
ein Paar ringförmiger Statorhalteplatten (47, 48), die auf beiden Seiten des Stators (22) in einer Stapelrichtung angeordnet sind; wobei die Statorhalteplatten (47, 48) in engem Kontakt mit beiden Seiten des Stators (22) angeordnet sind; und
eine Schnittstelle (52, 71, 72, 73), die an einer äußeren Umfangsoberfläche des Stators befestigt ist, um das Paar von Statorhalteplatten (47, 48) miteinander zu verbinden, **dadurch gekennzeichnet, dass**
die Schnittstelle (52, 71, 72, 73) den Stator (22) an einer Befestigungsoberfläche in einer Befestigungsposition der rotierenden elektrischen Maschine fixiert,
wobei die Schnittstelle (52, 71, 72, 73) eine gegossene Struktur aufweist, die von einer Befestigungsoberfläche an der äußeren Umfangsoberfläche des Stators (22) zu der Befestigungsoberfläche an der Befestigungsposition der rotierenden elektrischen Maschine durchgehend ist.

2. Rotierende elektrische Maschine (11; 11A) nach Anspruch 1, wobei
die Schnittstelle (52, 71, 72, 73) ein Statorkopplungsteil (52) aufweist, das in einer Umfangsrichtung des Stators (22) Endabschnitte hat, die jeweils an die äußere Umfangsoberfläche des Stators (22) gebogen sind, um die Befestigungsoberfläche an der äußeren Umfangsoberfläche des Stators (22) auszubilden, und
das Statorkopplungsteil (52) in einer axialen Richtung des Stators (22) Endabschnitte aufweist, die jeweils an dem Paar von Statorhalteplatten (47, 48) befestigt sind.

3. Rotierende elektrische Maschine (11; 11A) nach Anspruch 2, wobei
ein Raum zwischen der äußeren Umfangsfläche des Stators (22) und dem Statorkopplungsteil (52) ein Luftdurchlass (67) ist, durch den Kühlluft in der axialen Richtung des Stators strömt, und
der Luftdurchlass (67) in der axialen Richtung des Stators (22) eine Endseite aufweist, die mit einer Innenseite der rotierenden elektrischen Maschine durch eine Durchgangsöffnung einer des Paars von Statorhalteplatten (47, 48) und einen Kühlkanal kommuniziert; und eine andere Endseite aufweist, die mit einer Außenseite der rotierenden elektrischen Maschine durch eine Durchgangsöffnung einer anderen des Paars von Statorhalteplatten (47, 48) kommuniziert.

4. Rotierende elektrische Maschine (11; 11A) nach Anspruch 2 oder 3, wobei
die Schnittstelle (52, 71, 72, 73) ein Befestigungsteil (81; 84) aufweist, das die Befestigungsoberfläche an der Befestigungsposition der rotierenden elektrischen Maschine aufweist, und
die Befestigungsoberfläche als eine Schnittfläche in Oberflächenkontakt mit einer Befestigungsoberfläche an der Befestigungsposition der rotierenden elektrischen Maschine dient.

5. Rotierende elektrische Maschine (11; 11A) nach Anspruch 4, wobei
die Schnittstelle (52, 71, 72, 73) ein Trägerkopplungsteil (82; 83; 85; 86) aufweist, welches das Statorkopplungsteil (52) und das Befestigungsteil (81; 84) miteinander verbindet, und
das Trägerkopplungsteil (82; 83; 85; 86) senkrecht mit dem Statorkopplungsteil (52) und dem Befestigungsteil (81; 84) zwischen dem Paar von Statorhalteplatten (47, 48) verbunden ist.

6. Rotierende elektrische Maschine (11; 11A) nach einem der Ansprüche 2 bis 5, ferner aufweisend:
eine Kühlrippe (91), die auf einer Außenoberfläche des Statorkopplungsteils (52) angeordnet ist.

## Revendications

1. Machine tournante électrique (11 ; 11A) comprenant :
un rotor (21) ;
un stator (22) annulaire formé d'une pluralité de plaques magnétiques empilées à l'extérieur du rotor ;
une paire de plaques de maintien de stator annulaires (47, 48) disposées de part et d'autre du stator (22) dans la direction d'empilage ; les plaques de maintien de stator (47, 48) étant disposées en contact serré avec les deux côtés du stator (22) ; et
une interface (52, 71, 72, 73) fixée à une surface circonférentielle externe du stator afin de coupler la paire de plaques de maintien de stator (47, 48) ensemble,
**caractérisée en ce que**
l'interface (52, 71, 72, 73) fixe le stator (22) sur une surface de fixation à une position d'attache de machine tournante électrique,
dans laquelle l'interface (52, 71, 72, 73) présente une structure moulée continue depuis une surface de fixation sur la surface circonférentielle externe du stator (22) jusqu'à la surface de fixation à la position d'attache de machine tournante électrique.

2. Machine tournante électrique (11 ; 11A) selon la revendication 1, dans laquelle
l'interface (52, 71, 72, 73) inclut une partie de couplage de stator (52) présentant, dans une direction circonférentielle du stator (22), des portions d'extrémité pliées chacune vers la surface circonférentielle externe du stator (22) pour former la surface de fixation sur la surface circonférentielle externe du stator (22), et
la partie de couplage de stator (52) présente, dans une direction axiale du stator (22), des portions d'extrémité fixées respectivement à la paire de plaques de maintien de stator (47, 48).

3. Machine tournante électrique (11 ; 11A) selon la revendication 2, dans laquelle
un espace entre la surface circonférentielle externe du stator (22) et la partie de couplage de stator (52) est un passage d'air (67) à travers lequel de l'air de refroidissement s'écoule dans la direction axiale du stator, et
le passage d'air (67) présente : dans la direction axiale du stator (22), un côté d'extrémité communiquant avec un intérieur de la machine tournante électrique à travers un trou traversant d'une plaque parmi la paire de plaques de maintien de stator (47, 48) et un passage de refroidissement ; et un autre côté d'extrémité communiquant avec un extérieur de la machine tournante électrique à travers un trou traversant de l'autre plaque parmi la paire de plaques de maintien de stator (47, 48).

4. Machine tournante électrique (11 ; 11A) selon la revendication 2 ou 3, dans laquelle
l'interface (52, 71, 72, 73) inclut une partie de fixation (81 ; 84) présentant la surface de fixation à la position d'attache de machine tournante électrique, et
la surface de fixation sert de face de coupe en contact de surface avec une surface d'attache à la position d'attache de machine tournante électrique.

5. Machine tournante électrique (11 ; 11A) selon la revendication 4, dans laquelle l'interface (52, 71, 72, 73) inclut une partie de couplage de support (82 ; 83 ; 85 ; 86) couplant la partie de couplage de stator (52) et la partie de fixation (81 ; 84) ensemble, et
la partie de couplage de support (82 ; 83 ; 85 ; 86) est couplée perpendiculairement à la partie de couplage de stator (52) et à la partie de fixation (81 ; 84) entre la paire de plaques de maintien de stator (47, 48).

6. Machine tournante électrique (11 ; 11A) selon l'une quelconque des revendications 2 à 5, comprenant en outre :
une ailette de refroidissement (91) disposée sur une surface externe de la partie de couplage de stator (52).
